# EUROPÄISCHE PATENTSCHRIFT

(11) **EP 0 518 806 B1**
(45) Veröffentlichungstag und Bekanntmachung des Hinweises auf die Patenterteilung: **02.11.1994**
(21) Anmeldenummer: 92710015.6
(22) Anmeldetag: 10.06.1992
(51) Int. Cl.: A47L 15/00, D06F 43/08, D06F 39/00

(54) **Verfahren zur Wiederverwendung von Spül- oder Reinigungsflüssigkeit bei programmgesteuerten Geschirrspülmaschinen oder Waschmaschinen**
Process for reusing rinsing or cleaning fluid in programm-controlled dishwashers or washing-machines
Procédé de réutilisation de liquides de rinçage ou de lavage dans des machines à laver la vaisselle ou le linge comportant une commande par programme

(30) Priorität: 13.06.1991 DE 4119424
(43) Veröffentlichungstag der Anmeldung: 16.12.1992
(73) Patentinhaber: Miele & Cie. GmbH & Co., D-33332 Gütersloh (DE)
(72) Erfinder: Ennen, Günther, Dr., W-4904 Enger (DE); Hettenhausen, Ulrich, W-4800 Bielefeld 15 (DE); Hüttemann, Wilfried, W-4800 Bielefeld 15 (DE)

(56) Entgegenhaltungen:
- EP-A- 0 191 423
- EP-A- 0 302 448
- WO-A-90/14872
- DE-A- 1 460 305
- DE-A- 3 513 939

## Beschreibung

Der Gegenstand der Erfindung betrifft ein Verfahren zur Wiederverwendung von Spül- oder Reinigungsflüssigkeit bei programmgesteuerten Geschirrspülmaschinen oder Waschmaschinen, wobei die am Ende eines wasserführenden Spül- oder Reinigungsganges mit/ohne Wasseraufheizung aus dem Spülbehälter abgepumpte verschmutzte Flüssigkeit gereinigt, gegebenenfalls zwischengespeichert und in einem nachfolgenden Spül- oder Reinigungsgang in den Spülbehälter zurückgeführt wird.

Wasser wird heute in modernen wasserführenden Haushaltgeräten, insbesondere bei Geschirrspülmaschinen schon sehr sparsam eingesetzt. In den vergangenen Jahren wurde eine deutliche Verringerung des Wasserverbrauchs durch neu entwickelte Geräte und/oder Spülverfahren erreicht. So beschreibt beispielsweise die DE-OS 35 40 335 ein Verfahren bei einem wasserführenden Haushaltgerät, bei dem eine Reinigungsflüssigkeit in einem Kreislaufsystem für aufeinanderfolgende Reinigungsgänge zwischengespeichert und anschließend dem Reinigungsprozeß wieder zugeführt wird. Bei diesem insbesondere für Waschmaschinen entwickelten Verfahren wird die im Kreislaufsystem befindliche Flotte für aufeinanderfolgende unterschiedliche Wasch- oder Reinigungsprogramme mehrfach genutzt. Für Sonderwaschprogramme, oder insbesondere für eine Geschirreinigung in programmgesteuerten Geschirrspülmaschinen mit der Maßgabe einer hygienisch und bakteriologisch einwandfreien Geschirroberfläche ist dieses Verfahren ohne mehrfache Zugaben von Frischwasser jedoch nicht geeignet. Die Grenze für ein schonendes, optimales und wirtschaftliches Geschirrspülen mit wenig Wasser scheint mit den herkömmlichen Verfahren somit erreicht zu sein, so daß zu weiteren Reduzierungen des Frischwasser- und Energieverbrauchs neue Verfahren erforderlich werden.

Die Erfindung löst dieses Problem bei einem Verfahren zur Wiederverwendung von Spül- oder Reinigungsflüssigkeit in programmgesteuerten Geschirrspülmaschinen oder Waschmaschinen durch die Merkmale des Anspruchs 1.

Vorteilhafte Weiterbildungen des Verfahrens sind den Unteransprüchen zu entnehmen.

Durch die Erfindung wird in vorteilhafter Weise eine drastische Reduzierung des Verbrauchs von teuerem Frischwasser bei gleicher Reinigungsleistung gegenüber den bisher bekannten Wassersparverfahren bei wasserführenden Haushaltgeräten, insbesondere bei Geschirrspülmaschinen erreicht. Dabei ist der Anfall von Abwasser vernachlässigbar klein. Es geht auch nahezu keine Energie verloren, weil auch die zum Verdampfen zugeführte Wärmeenergie vollständig wiederverwendet werden kann. Darüber hinaus ist das erfindungsgemäße Verfahren sehr umweltschonend. Von der gereinigten Spül- oder Reinigungslauge bleibt nur trockenes Filtrat zurück, das problemlos im Hausmüll entsorgt werden kann.

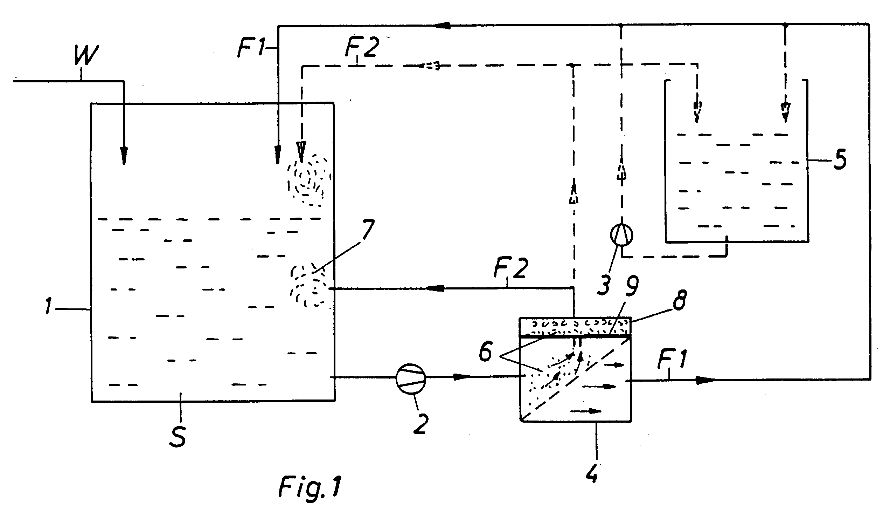

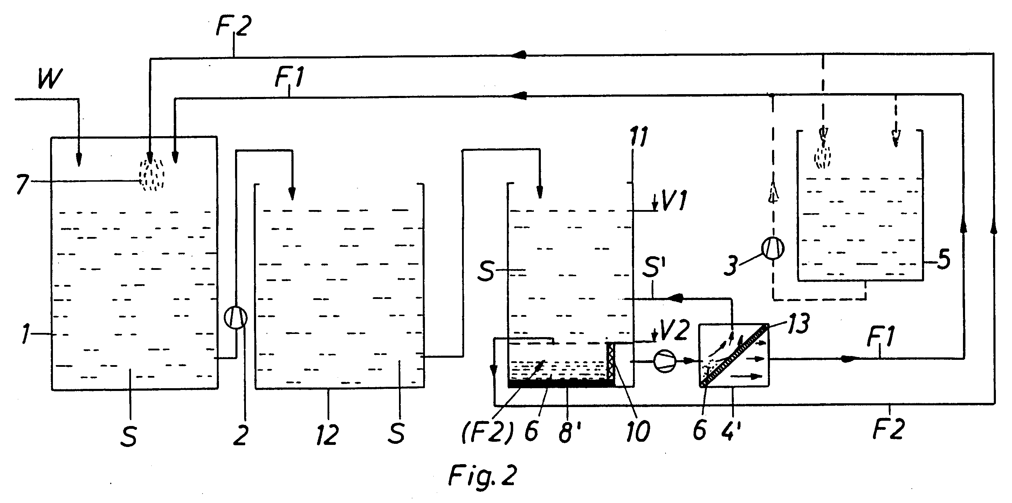

Das erfindungsgemäße Verfahren ist nachstehend an Hand schematisch gezeigter Ausführungsbeispiele (Figuren 1 und 2) näher beschrieben.

Mit (1) ist in einem ersten Ausführungsbeispiel gemäß Fig. 1 schematisch der mit einer Heizung versehene Spülbehälter einer nicht dargestellten programmgesteuerten Geschirrspülmaschine bezeichnet, die in bekannter Weise wählbare Programme in z. B. vier Programmvarianten besitzt. Als wählbare Programme können beispielsweise die Programme Universal, Spar, Fein oder Intensiv vorgesehen sein, die jeweils wasserführende Programmabschnitte, wie Vorspülen, Reinigen, Zwischenspülen und Klarspülen beinhalten und mit einem Programmabschnitt Trocknen enden. Beim Sparprogramm entfällt z. B. das Vorspülen. Der Spülbehälter (1) erhält zu Beginn eines wasserführenden Programmabschnittes (z. B. Vorspülen) über einen Frischwasseranschluß (W) seine erstmalige Spülwasserfüllung. Jeweils am Ende eines wasserführenden Programmabschnittes wird die verbrauchte Spülflüssigkeit (S) aus dem Spülbehälter (1) mittels der gerateeigenen Entleerungspumpe (2) abgepumpt. Die abgepumpte Spülflüssigkeit (S) ist durch das geräteinterne Sieb zumindest grob gereinigt. Statt einer Geschirrspülmaschine könnte jedoch auch eine Waschmaschine verwendet werden.

Die am Ende eines wasserführenden Spül- oder Reinigungsganges mit/ohne Wasseraufheizung aus dem Spülbehälter (1) abgepumpte Spülflüssigkeit (S) wird gereinigt, gegebenenfalls zwischengespeichert und in einem nachfolgenden Spül- oder Reinigungsgang in den Spülbehälter (1) zurückgeführt. Hierfür kann eine separate Pumpe (3) vorgesehen werden.

Die ungereinigte Spülflüssigkeit (S) aus dem Spülbehälter (1) wird kontinuierlich durch ein Querstromfilter (4), vorzugsweise durch ein Feinstfilter (Ultrafilter) geleitet und verläßt dieses Filter als wiederverwendbares, gereinigtes Spülwasser (erste Flüssigkeitsteilmenge F1). Am Ende dieser direkten Filtration verbleibt eine vorzugsweise vorbestimmbare ungefilterte Restwassermenge (zweite Flüssigkeitsteilmenge F2) in der Filtereinheit. Das Mengenverhältnis ist so, daß die durch die Filtereinheit (4) bzw. durch das Filter geleitete Spülwassermenge als erste Flüssigkeitsteilmenge (F1) einem Vielfachen der ungefilterten Restwassermenge (z. B. 0,5 bis 2 Liter) entspricht. Die gereinigte Flüssigkeitsteilmenge (F1) wird für einen nachfolgenden Spül- oder Reinigungsgang unmittelbar in den Spülbehälter (1) zurückgeführt oder vorrübergehend in einem Vorratsbehälter (5) zwischengespeichert.

Der aus der Flüssigkeitsteilmenge (F1) beim Durchströmen des Querstromfilters (4)herausgefilterte Schmutz (6) wird regelmäßig der noch ungefilterten zweiten Flüssigkeitsteilmenge (F2) in der Filtereinheit aufkonzentriert. Die mit dem abgefilterten Schmutz (6) ständig zunehmend belastete Flüssigkeitsteilmenge (F2) wird, wenn sich die gewünschte Restwassermenge eingestellt hat, anschließend verdampft, verflüssigt und der filtrierten Flüssigkeitsteilmenge (F1) gereinigt wieder zugemischt oder für einen nachfolgenden Spülgang, insbesondere für den Klarspülgang separat verwendet. Hierfür könnte ein besonderer Zwischenspeicher vorgesehen werden. Auch die Zumischung kann entweder in einem eventuell vorhandenen Zwischenspeicher (Vorratsbehälter 5) oder im Spülbehälter (1) selbst erfolgen. Danach steht die saubere Gesamtflüssigkeitsmenge wieder für eine erneute Verwendung in einem Spülprozeß zur Verfügung. Dieser Kreislauf kann sich beliebig oft wiederholen. Sollte die gereinigte Spülwassermenge für einen Spülprozeß nicht mehr ausreichend sein, so kann gegebenenfalls ein Anteil Frischwasser aus dem Wasserleitungsnetz zugemischt werden.

Von der abgepumpten Spülflüssigkeitsmenge (S) werden vorzugsweise 80% bis 90% der Filtration unterworfen. Dies entspricht der Flüssigkeitsmenge (F1). Die zu verdampfende zweite Flüssigkeitsteilmenge (F2) wird demnach ca. 10% bis 20% der abgepumpten Gesamt-Spülflüssigkeitsmenge betragen und stellt die vobeschriebene Restwassermenge dar. Diese letztlich zu verdampfende Restwassermenge ist entweder fest vorgebbar oder auch abhängig vom jeweiligen Schmutzanfall bestimmbar. Hierfür ist die Filtrationseinrichtung entsprechend einstellbar ausgelegt.

Neben einem wassersparenden Betrieb ist mit dem erfindungsgemäßen Verfahren auch eine energiesparende Arbeitsweise der Geschirrspülmaschine möglich, da die Kondensationswärme oder Verdampfungswärme der Restwassermenge (F2) zur Spülwassererwärmung ausgenutzt werden kann. Der heiße Dampf (7) dieser verdampften Flüssigkeitsteilmenge kann zur Kondensation entweder direkt in die gefilterte erste Flüssigkeitsteilmenge (F1) eingeblasen werden, oder der Dampf (7) wird auf die Bottichwände des Spülbehälters (1) bzw. des vorzugsweise wärmeisolierten Vorratsbehälters (5) geleitet.

Der aufkonzentrierte Schmutz (6) der zweiten Flüssigkeitsteilmenge (F2) wird beim Verdampfungsvorgang getrocknet. Die dafür notwendige Verdampfungseinrichtung (8) kann dabei fester Bestandteil der Filtrationseinrichtung (4) oder getrennt von dieser installiert sein. Der Trocknungsvorgang ist so gesteuert, daß der Schmutz vollständig getrocknet wird und der Einrichtung für eine spätere Entsorgung leicht entnommen werden kann. Als Verdampfer könnte ein Heizelement (9) nach Art einer Herdplatte oder dergl. verwendet werden, auf welcher sich der Schmutz für die anschließende Entsorgung im Hausmüll sammelt.

In Fig. 2 ist eine weitere vorteilhafte Variante des erfindungsgemäßen Verfahrens gezeigt, wobei die aus dem Spülbehälter (1) abgepumpte Spülflüssigkeit (S) zwischengespeichert und anschließend dem Prozeß der Filtration unterworfen wird. Die aufgefangene Spülflüssigkeit kann aus einem oder mehreren Spülgängen oder Spülprogrammen stammen.

Der Filtrationprozeß umfaßt nach diesem Ausführungsbeispiel eine Vorfiltration, durch welche dem bereits benutzten und grob gefiltertem Spülwasser die Feinschmutzanteile entzogen werden, sowie eine Nachfiltration, durch welche anschließend feinste Schmutz- oder Schwebeteilchen aus dem Spülwasser herausgefiltert werden.

Die zu reinigende und mindestens bereits schon einmal gebrauchte Spülflüssigkeit (S) wird aus einem dem Spülbehälter (1) nachgeschalteten Zwischenspeicher (11), dem gegebenenfalls ein weiterer Auffangbehälter (12) als Puffer vorgeschaltet ist, abgepumpt und im Umwälzkreislauf der Filtration unterzogen.

Im Auslaufbereich des Zwischenspeichers (11) ist zur Vorfiltration ein Feinfilter (Vorfilter 10) vorgesehen, durch welches die Spülflüssigkeit (S) aus dem Zwischenspeicher (11) durch Pumpendruck gefördert wird. Weiterhin ist diesem Vorfilter (10) eine vorzugsweise aus einem Querstromfilter (4') gebildete Feinstfiltereinheit (Ultrafilter) nachschaltet, in welche die Spülflüssigkeit anschließend zur Feinstschmutzausfilterung eingeleitet wird. Bei diesem Filterungsprozeß verzweigt sich ständig vorgereinigte Spülflüssigkeit im Querstromfilter, wobei auch Spülflüssigkeit über und durch die Siebflächen (13) des Querstromfilters (4') strömt. Der über die diagonal angeordneten Siebflächen (13) geführte Spülflüssigkeitsstrom (S') (sh. Pfeile) wird in den Zwischenspeicher (11) zurückgeführt. Aus dem zurückfließenden Spülwasser wird auch ein gewisser Anteil Feinstschmutz vom Sieb abgefangen. Ferner gelangt umgewälzte Spülflüssigkeit direkt durch das Querstromfilter (4'). Dieser Kreislauf wird in der Regel solange aufrechterhalten, bis das Spülwasser bis auf die vorbestimmte Flüssigkeitsteilmenge (F2) bzw. bis auf die Restwassermenge (z. B. 2 Liter) aus dem Zwischenspeicher abgepumpt ist. Die Fig. 2 verdeutlicht dies durch eine Füllvolumenmarkierung (V1, V2) am Zwischenspeicher (11). Die insgesamt durch das Querstromfilter (4') fließende Flüssigkeitsteilmenge (F1) (entspricht der Flüssigkeitsmenge von V1 bis V2) wird von Feinstschmutz gereinigt für einen nachfolgenden Spül- oder Reinigungsgang in den Spülbehälter (1) zurückgeführt oder vorrübergehend im weiteren Zwischenspeicher aufgefangen.

Resultierend aus dem ständigen Abzweigen von gereinigtem Spülwasser beim Umwälzvorgang verbleibt immer weniger Spülflüssigkeit (S) im Zwischenspeicher (11). Durch den Filtrationsprozeß erhöht sich dabei der Schmutzanteil in der im Zwischenspeiche zurückgebliebenen ungefilterten Flüssigkeitsmenge. Es wird also ständig Schmutz aufkonzentriert, welcher in der letztlich verbleibenden Restwassermenge (F2) seine höchste Konzentration besitzt. Die Restwassermenge (F2) wird verdampft, verflüssigt und der filtrierten ersten Flüssigkeitsteilmenge (F1) gereinigt zugemischt. Zweckmäßig ist jedoch die Verwendung dieser 100% reinen Flüssigkeitsmenge für einen nachfolgenden Klarspülgang. Sollte die gereinigte Spülwassermenge für einen Spülprozeß nicht mehr ausreichend sein, so kann auch hier gegebenenfalls ein Anteil Frischwasser aus dem Wasserleitungsnetz zugemischt werden.

Der dem Spülbehälter unmittelbar nachgeschaltete Auffangbehälter (12) kann beispielsweise so dimensioniert werden, daß eine Spülwassermenge (z. B. 40 Liter) aus mehreren Spülgängen vorzugsweise aus zwei vollständigen Spülprogrammen aufgefangen werden kann. Der nachgeschaltete Zwischenspeicher besitzt dann ein kleineres Spülwasser-Speichervolumen von vorzugsweise 20 Liter.

Die Filtrationseinheiten, bestehend aus dem im Spülwasserkreislauf vorgesehenen Vorfilter (10) als Feinfilter zur Vorfiltration der abgepumpten Spülflüssigkeit (S) und aus dem nachgeschalteten Querstromfilter (4; 4')als Feinstfilter (Ultrafilter) können zweckmäßig zu einer Filtrationseinrichtung zusammengefaßt werden. Diese Einheit ist ausgangsseitig einerseits mit dem gegebenenfalls vorhandenen Zwischenspeicher (11) für die ungefilterte Spülflüssigkeit (S) oder mit der Verdampfungseinrichtung (8; 8') und andererseits mit dem Vorratsbehälter (5) oder Spülbehälter (1) für die gereinigte Spülflüssigkeit verbunden.

## Patentansprüche

1. Verfahren zur Wiederverwendung von Spül- oder Reinigungsflüssigkeit bei programmgesteuerten Geschirrspülmaschinen oder Waschmaschinen, wobei die am Ende eines wasserführenden Spül- oder Reinigungsganges mit/ohne Wasseraufheizung aus dem Spülbehälter abgepumpte verschmutzte Flüssigkeit gereinigt, gefiltert, gegebenenfalls zwischengespeichert und in einem nachfolgenden Spül- oder Reinigungsgang in den Spülbehälter zurückgeführt wird,
dadurch gekennzeichnet,
daß von der abgepumpten aus einem oder mehreren Spülgängen oder Spülprogrammen bereitgestellten Spülflüssigkeit (S) eine Flüssigkeitsteilmenge (F1) bis zu einer bestimmbaren Restwassermenge (F2) einer Filtration für die Spülwasser-Wiederverwendung unterzogen wird, und daß die am Ende der Filtration mit einer aufkonzentrierten Schmutzmenge zurückbleibende ungefilterte Restwassermenge (F2) verdampft, verflüssigt und der filtrierten Spülflüssigkeit anschließend zugemischt oder für einen nachfolgenden Spülgang separat verwendet wird.

2. Verfahren zur Wiederverwendung von Spül- oder Reinigungsflüssigkeit nach Anspruch 1,
daß die Flüssigkeitsteilmenge (F1) die Restwassermenge (F2) um ein Mehrfaches übersteigt.

3. Verfahren zur Wiederverwendung von Spül- oder Reinigungsflüssigkeit nach Anspruch 1 und 2,
dadurch gekennzeichnet,
daß von der abgepumpten Spülflüssigkeitsmenge (S) vorzugsweise 80% bis 90% der Filtration unterworfen und die verbleibende Flüssigkeitsmenge als Restwassermenge (F2) verdampft wird.

4. Verfahren zur Wiederverwendung von Spül- oder Reinigungsflüssigkeit nach den Ansprüchen 1 bis 3,
dadurch gekennzeichnet,
daß die Kondensationswärme der verdampften Restwassermenge (F2) zur Spülwassererwärmung ausgenutzt wird.

5. Verfahren zur Wiederverwendung von Spül- oder Reinigungsflüssigkeit nach den Ansprüchen 1 bis 4,
dadurch gekennzeichnet,
daß der heiße Dampf (7) der Restwassermenge (F2) zur Kondensation direkt in die gefilterte Flüssigkeitsteilmenge (F1) eingeblasen wird.

6. Verfahren zur Wiederverwendung von Spül- oder Reinigungsflüssigkeit nach den Ansprüchen 1 bis 5,
dadurch gekennzeichnet,
daß die verdampfte Restwassermenge (Flüssigkeitsteilmenge (F2) zur Kondensation auf die Bottichwände des Spülbehälters (1) oder des vorzugsweise wärmeisolierten Zwischenspeichers (5) geleitet wird.

7. Verfahren zur Wiederverwendung von Spül- oder Reinigungsflüssigkeit nach den Ansprüchen 1 bis 6,
dadurch gekennzeichnet,
daß der aufkonzentrierte Schmutz (6) der Restwassermenge (F2) beim Verdampfungsvorgang so getrocknet wird, daß dieser der Einrichtung entnommen und anschließend entsorgt werden kann.

8. Verfahren zur Wiederverwendung von Spül- oder Reinigungsflüssigkeit nach einem oder mehreren der Ansprüche 1 bis 7,
dadurch gekennzeichnet,
daß für den Verdampfungsprozeß eine Verdampfungseinrichtung (8; 8') vorgesehen ist, die vorzugsweise mit der Einrichtung (4; 4',10) zur Filtration kombiniert ist.

9. Verfahren zur Wiederverwendung von Spül- oder Reinigungsflüssigkeit nach einem oder mehreren der Ansprüche 1 bis 8,
dadurch gekennzeichnet,
daß die abgepumpte Spülflüssigkeit (S) unmittelbar oder gegebenenfalls zwischengespeichert dem Prozeß der Filtration unterworfen wird.

10. Verfahren zur Wiederverwendung von Spül- oder Reinigungsflüssigkeit nach einem oder mehreren der Ansprüche 1 bis 9,
dadurch gekennzeichnet,
daß der Filtrationprozeß eine Vorfiltration, durch welche dem bereits benutzten Spülwasser Feinschmutz entzogen wird sowie eine Nachfiltration einschließt, durch welche feinste Schmutz- oder Schwebeteilchen aus der Spülflüssigkeit (S) ausgefiltert werden.

11. Verfahren zur Wiederverwendung von Spül- oder Reinigungsflüssigkeit nach einem oder mehreren der Ansprüche 1 bis 10,
dadurch gekennzeichnet,
daß die zu filtrierende Spülflüssigkeit (S) aus einem dem Spülbehälter nachgeschalteten Zwischenspeicher (11), dem gegebenenfalls ein weiterer Auffangbehälter (12) als Puffer vorgeschaltet ist, fortlaufend abgezogen und im Umwälzkreislauf der Vor- und Nachfiltration unterzogen wird, wobei einerseits jeweils gereinigte Spülflüssigkeit (Flüssigkeitsteilmenge F1) abgezweigt und für einen nachfolgenden Spül- oder Reinigungsgang in den Spülbehälter (1) zurückgeführt oder vorrübergehend zwischengespeichert wird und andererseits vorgereinigte Spülflüssigkeit in den Zwischenspeicher (11) zurückgeführt wird, und daß beim Umwälzvorgang abgefilterter Schmutz (6) der im Zwischenspeicher (11) jeweils verbliebenen Spülflüssigkeit (S) solange aufkonzentriert wird, bis sich die gewünschte Restwassermenge (F2) eingestellt hat, welche anschließend verdampft, verflüssigt und der filtrierten ersten Flüssigkeitsteilmenge (F1) gereinigt zugemischt oder für einen nachfolgenden Klarspülgang verwendet wird.

12. Verfahren zur Wiederverwendung von Spül- oder Reinigungsflüssigkeit nach einem oder mehreren der Ansprüche 1 bis 11,
dadurch gekennzeichnet,
daß der dem Spülbehälter unmittelbar nachgeschaltete Auffangbehälter (12) eine Spülwassermenge aus mehreren Spülgängen vorzugsweise aus zwei vollständigen Spülprogrammen aufnehmen kann, und daß der nachgeschaltete Zwischenspeicher (11) ein kleineres Spülwasser-Speichervolumen besitzt.

13. Verfahren zur Wiederverwendung von Spül- oder Reinigungsflüssigkeit nach einem oder mehreren der Ansprüche 1 bis 12,
dadurch gekennzeichnet,
daß die Filtrationseinrichtung aus einem im Spülwasserkreislauf im Zwischenspeicher (11) vorgesehenen Feinfilter zur Vorfiltration der Spülflüssigkeit (S) und aus einem diesem Vorfilter (10) nachgeschalteten Feinstfilter (Ultrafilter), insbesondere einem Querstromfilter (4; 4') besteht, dessen Ausgänge einerseits in den gegebenenfalls vorhandenen Zwischenspeicher (11) für die ungefilterte Spülflüssigkeit (S) oder in die Verdampfungseinrichtung (8; 8') und andererseits in den Vorratsbehälter (5) oder Spülbehälter (1) für die gereinigte Spülflüssigkeit geführt sind.

## Claims

1. Process for recycling rinsing or wash liquor for a programme-controlled dishwasher or washing machine, whereby the dirty water which is drained from the wash cabinet at the end of any water-using wash cycle with/without water heatup is processed, filtered and stored, if necessary, so that it can be reintroduced to the wash cabinet for use in a subsequent wash cycle, characterised in that from the available wash liquor (S), which has been drained from one or several wash cycles or wash programmes, a proportion of liquor (F1), up to a quantifiable amount of the residual water (F2), is filtered for reuse in a wash cycle and at the end of the filtration process the remaining unfiltered residual water (F2), containing highly concentrated soil, is evaporated, condensed and finally added to the filtered wash liquor or used separately for a subsequent wash cycle.

2. Process for recycling rinsing or wash liquor in accordance with claim 1, whereby the proportion of liquor (F1) is several times higher than the amount of residual water (F2).

3. Process for recycling rinsing or wash liquor in accordance with claims 1 and 2, whereby preferably 80% to 90% of the drained wash liquor (S) is filtered and the remaining liquor is evaporated as residual water (F2).

4. Process for recycling rinsing or wash liquor in accordance with claims 1 to 3, whereby the heat of condensation of the evaporated residual water (F2) is used to heat up the wash liquor.

5. Process for recycling rinsing or wash liquor in accordance with claims 1 to 4, whereby the hot steam (7) from the residual water (F2) is injected directly into the filtered liquor (F1) and condenses.

6. Process for recycling rinsing or wash liquor in accordance with claims 1 to 5, whereby the evaporated residual water (F2) is condensed on the walls of the inner cabinet (1) or of the reservoir (5) which should preferably be heat-insulated.

7. Process for recycling rinsing or wash liquor in accordance with claims 1 to 6, whereby the concentrate (soil 6) of the residual water (F2) is dried during the evaporation process in such a way that it can be removed from the system for subsequent disposal.

8. Process for recycling rinsing or wash liquor in accordance with one or several of the claims 1 to 7, whereby an evaporation unit (8; 8') is fitted for the evaporation process which should preferably be combined with the unit (4; 4',10) for filtration purposes.

9. Process for recycling rinsing or wash liquor in accordance with one or several of the claims 1 to 8, whereby the drained liquor (S) is filtered immediately or, if necessary, after temporary storage.

10. Process for recycling rinsing or wash liquor in accordance with one or several of the claims 1 to 9, whereby filtration includes a pre-filtration stage, during which fine soil is removed from the liquor which has already been used, and a final filtration stage in which finest soil or suspended particles are filtered from the liquor (S).

11. Process for recycling rinsing or wash liquor in accordance with one or several of the claims 1 to 10, whereby the liquor to be filtered (S) is continuously taken from a reservoir (11) fitted downstream from the wash cabinet, to which, if necessary, an additional tank (12) is fitted upstream as a buffer; the liquor is then circulated through the pre- and final filtration process, whereby on the one hand filtered liquor (F1) is diverted and reintroduced to the cabinet (1) for use in a subsequent wash cycle or temporarily stored, and on the other hand processed liquor is reintroduced to the reservoir (11) and in the course of the circulation process the filtered soil (6) from the liquor (S) remaining in the reservoir (11) is processed until the desired amount of residual water (F2) has been attained; this is subsequently evaporated, condensed and either added in a processed condition to the initial filtered liquor (F1) or used for a subsequent rinse cycle.

12. Process for recycling rinsing or wash liquor in accordance with one or several of the claims 1 to 11, whereby the tank (12) fitted immediately downstream from the wash cabinet can hold liquor from a multiple of wash cycles, preferably from two complete programme cycles, and that the downstream reservoir (11) has a smaller storage capacity.

13. Process for recycling rinsing or wash liquor in accordance with one or several of the claims 1 to 12, whereby the filtration unit consists of a fine filter fitted in the reservoir (11) within the circuit of the wash liquor for pre-filtering the liquor (S) and an ultra-fine filter, fitted downstream from the pre-filter (10), in particular a cross-flow filter (4;4'), whose outlets are situated in the reservoir (11), if available, or in the evaporation unit (8;8') for the unfiltered liquor (S) and in the reservoir (5) or cabinet (1) for the processed liquor.

## Revendications

1. Procédé de réutilisation du liquide de lavage ou de rinçage de lave-vaisselle ou lave-linge commandés par programme, le liquide souillé, évacué de la cuve de lavage par pompage à la fin d'un cycle de lavage ou de rinçage avec ou sans chauffage de l'eau, étant épuré, filtré, éventuellement temporairement stocké et renvoyé dans la cuve de lavage lors d'un cycle de lavage ou de rinçage consécutif, **caractérisé** en ce qu'une quantité partielle (F1) du liquide de lavage (S) évacué par pompage provenant d'un ou plusieurs cycles ou programmes de lavage est soumis à une filtration en vue de la réutilisation de l'eau de lavage, en laissant une quantité déterminable d'eau résiduelle (F2), et en ce que la quantité d'eau résiduelle (F2) non filtrée, restante à la fin de la filtration et chargée d'une quantité de saleté concentrée, est vaporisée, condensée puis mélangée au liquide de lavage filtré ou utilisé séparément pour un cycle de lavage consécutif,

2. Procédé de réutilisation de liquide de lavage ou de rinçage selon la revendication 1, **caractérisé** en ce que la quantité partielle de liquide (F1) est plusieurs fois supérieure à la quantité d'eau résiduelle (F2).

3. Procédé de réutilisation de liquide de lavage ou de rinçage selon les revendications 1 et 2, **caractérisé** en ce que 80 à 90%, de préférence, de la quantité de liquide de lavage (S) évacuée par pompage sont soumis à la filtration et la quantité résiduelle de liquide, constituant la quantité d'eau résiduelle (F2), est vaporisée.

4. Procédé de réutilisation de liquide de lavage ou de rinçage selon les revendications 1 à 3, **caractérisé** en ce qu'on utilise la chaleur de condensation de la quantité d'eau résiduelle (F2) vaporisée pour réchauffer l'eau de lavage.

5. Procédé de réutilisation de liquide de lavage ou de rinçage selon les revendications 1 à 4, **caractérisé** en ce que la vapeur très chaude (7) de la quantité d'eau résiduelle (F2) est, en vue de sa condensation, directement insufflée dans la quantité partielle de liquide filtrée (F1).

6. Procédé de réutilisation de liquide de lavage ou de rinçage selon les revendications 1 à 5, **caractérisé** en ce que la quantité d'eau résiduelle vaporisée (quantité partielle de liquide F2) est, en vue de sa condensation, dirigée sur les parois de la cuve de lavage (1) ou du réservoir intermédiaire (5) de préférence calorifugé.

7. Procédé de réutilisation de liquide de lavage ou de rinçage selon les revendications 1 à 6, **caractérisé** en ce que la saleté concentrée (6) de la quantité d'eau résiduelle (F2) est, lors du processus de vaporisation, séchée de sorte telle qu'elle peut être enlevée de la machine puis mise à la poubelle.

8. Procédé de réutilisation de liquide de lavage ou de rinçage selon une ou plusieurs des revendications 1 à 7, **caractérisé** en ce qu'est prévu, pour le processus de vaporisation, un dispositif vaporisateur (8 ; 8') qui est de préférence combiné au dispositif de filtration (4 ; 4', 10).

9. Procédé de réutilisation de liquide de lavage ou de rinçage selon une ou plusieurs des revendications 1 à 8, **caractérisé** en ce que le liquide de lavage (S) évacué par pompage est directement soumis au processus de filtration, ou éventuellement après un stockage intermédiaire.

10. Procédé de réutilisation de liquide de lavage ou de rinçage selon une ou plusieurs des revendications 1 à 9, **caractérisé** en ce que le processus de filtration comprend une préfiltration, par laquelle les saletés fines sont extraites de l'eau de lavage usée, ainsi qu'une seconde filtration, par laquelle les particules de saleté ou en suspension très fines sont extraites du liquide de lavage (S).

11. Procédé de réutilisation de liquide de lavage ou de rinçage selon une ou plusieurs des revendications 1 à 10, **caractérisé** en ce que le liquide de lavage (S) à filtrer est soutiré en continu d'un réservoir intermédiaire (11), branché à la suite de la cuve de lavage et éventuellement précédé d'un récipient collecteur supplémentaire (12) comme tampon, et soumis à la préfiltration et à la seconde filtration en une circulation selon laquelle, d'une part du liquide de lavage chaque fois épuré (quantité partielle de liquide F1) quitte cette circulation pour retourner dans la cuve de lavage (1) pour un cycle de lavage ou de rinçage consécutif ou être provisoirement stocké, et d'autre part du liquide de lavage pré-épuré est renvoyé dans le réservoir intermédiaire (11), et en ce que la saleté (6) extraite au cours du processus de circulation est concentrée dans le liquide de lavage (S) chaque fois laissé dans le réservoir intermédiaire (11) jusqu'à ce que se soit réglée la quantité souhaitée d'eau résiduelle (F2), qui est finalement vaporisée, condensée et mélangée à l'état épuré à la première quantité partielle de liquide filtrée (F1), ou utilisée pour un cycle de rinçage final consécutif.

12. Procédé de réutilisation de liquide de lavage ou de rinçage selon une ou plusieurs des revendications 1 à 11, **caractérisé** en ce que le récipient collecteur (12) branché directement à la suite de la cuve de lavage peut contenir une quantité d'eau de lavage provenant de plusieurs cycles de lavage, de préférence de deux programmes de lavage complets, et en ce que le réservoir intermédiaire (11) qui lui succède possède une contenance inférieure d'eau de lavage.

13. Procédé de réutilisation de liquide de lavage ou de rinçage selon une ou plusieurs des revendications 1 à 12, **caractérisé** en ce que le dispositif de filtration est constitué d'un filtre fin prévu dans le réservoir intermédiaire (11) dans le circuit de circulation d'eau de lavage et destiné à la préfiltration du liquide de lavage (S), et d'un filtre très fin (ultrafiltre) branché à la suite de ce préfiltre (10) et dont les sorties mènent, d'une part dans le réservoir intermédiaire (11) éventuellement présent pour le liquide de lavage (S) non filtré ou dans le dispositif de vaporisation (8, 8'), et d'autre part dans le réservoir de stockage (5) ou la cuve de lavage (1) pour le liquide de lavage épuré.
